# EUROPÄISCHE PATENTSCHRIFT

(11) **EP 1 177 407 B1**
(45) Veröffentlichungstag und Bekanntmachung des Hinweises auf die Patenterteilung: **15.02.2006**
(21) Anmeldenummer: 00989832.1
(22) Anmeldetag: 07.12.2000
(51) Int. Cl.: F01P 3/20, F01N 3/04

(54) **ABSCHALTBARER WÄRMETAUSCHER**
SWITCHED HEAT EXCHANGER
ECHANGEUR DE CHALEUR POUVANT ETRE COMMUTE

(30) Priorität: 17.12.1999 DE 19960929
(43) Veröffentlichungstag der Anmeldung: 06.02.2002
(73) Patentinhaber: ROBERT BOSCH GMBH, 70442 Stuttgart (DE)
(72) Erfinder: DAMSON, Daniel, 71254 Ditzingen (DE); HOHL, Reiner, 70197 Stuttgart (DE)
(86) Internationale Anmeldenummer: PCT/DE2000/004352
(87) Internationale Veröffentlichungsnummer: WO 2001/044739

(56) Entgegenhaltungen:
- DE-A- 3 937 314
- US-A- 2 175 121
- US-A- 2 401 510
- US-A- 4 095 575
- US-A- 4 126 108

## Beschreibung

### Stand der Technik

Die Erfindung geht von einem Wärmetauscher nach dem Oberbegriff des Anspruchs 1 aus.

Die spezifische Belastung der Umwelt infolge des Ausstoßes von Kohlenstoffdioxyd durch Brennkraftmaschinen hängt im wesentlichen von deren Wirkungsgrad ab. Dieser ist unter anderem nicht zufriedenstellend, wenn die Brennkraftmaschine unterhalb ihrer optimalen Betriebstemperatur betrieben wird. In einigen Betriebszuständen, beispielsweise beim Kaltstart oder langen Talfahrten von Kraftfahrzeugen wird die optimale Temperatur der Brennkraftmaschine nicht erreicht, was zu einem erhöhten Kraftstoffverbrauch und zu erhöhten Abgasemissionen führt. Beim Kaltstart mit niedrigen Außentemperaturen wird zusätzlich Wärme zum Enteisen der Scheiben oder zum Beheizen des Fahrzeuginnenraums benötigt, um die Fahrsicherheit und den Fahrkomfort zu verbessern. Derzeit werden zur Lösung dieser Problematik vorwiegend chemische oder elektrische Zuheizer eingesetzt. Ihr Einsatz ist jedoch ebenfalls mit einem erhöhten Kraftstoffverbrauch verbunden.

Aus einer Sonderbeilage "System Partners 98" S. 4 zur MTZ (Motor Technische Zeitschrift) 7/2 98 ist ein Wärmetauscher bekannt, der in eine Abgasrückführleitung eingebaut wird, um das in einen Brennraum der Brennkraftmaschine zurückzuführende Abgas zu kühlen. Durch die Kühlung des Abgases wird die Füllung verbessert. Da der Wärmetauscher während des gesamten Betriebs der Brennkraftmaschine ständig im Einsatz ist, kommt es zu einem kontinuierlichen Wärmeeintrag in das Kühlmittel der Brennkraftmaschine, und zwar auch im Vollastbetrieb. Um aber eine Überhitzung des Kühlmittels und der Brennkraftmaschine in diesem Fahrzustand zu vermeiden, muss zusätzlich Wärme über den Hauptkühler der Brennkraftmaschine abgeführt werden. Der Hauptkühler und der ihm zugeordnete Lüfter müssen entsprechend größer dimensioniert werden.

Aus der US 4 095 575 A ist ein Wärmetauscher zwischen einem Kühlkreislauf und einer Abgasleitung einer Brennkraftmaschine bekannt, der einen Kühlmittelzulauf mit einer Absperrvorrichtung und einen Kühlmittelrücklauf für die Kühlmittelkanäle sowie einen Abgaseintritt und einen Abgasaustritt für Abgaskanäle aufweist und in einem Hauptabgasstrom angeordnet ist. Bei Überschreiten einer oberen Grenztemperatur des Kühlmittels wird der Zufluss zum Wärmetauscher abgesperrt, sodass sich dieser über eine Entleerungsleitung unter dem Einfluss der Schwerkraft in einen Überlauftank entleeren kann. Dieser ist über eine Rücklaufleitung an einer hochgelegenen Stelle mit dem Wärmetauscher verbunden über die Luft in den Wärmetauscher strömt, wenn sich dieser über die Entleerungsleitung entleert. Damit sich der Wärmetauscher entleeren kann, muss er oberhalb des Flüssigkeitsspiegels des Überlauftanks angeordnet werden. Wird eine untere Grenztemperatur unterschritten, öffnet die Absperrvorrichtung. Der Wärmetauscher wird wieder gefüllt, wobei die Luft in den Überlauftank gelangt und sich der Flüssigkeitsspiegel in diesem entsprechend absenkt, da die Pumpe zum Auffüllen des Wärmetauschers das Flüssigkeitsvolumen aus dem Überlauftank entnimmt.

### Vorteile der Erfindung

Nach der Erfindung ist der Wärmetauscher in einem Hauptabgasstrom angeordnet und im Kühlmittelzulauf ist eine Absperrvorrichtung vorgesehen. Dadurch kann die nutzbare Wärme des Abgases beim Kaltstart optimal verwendet werden, um die Betriebstemperatur der Brennkraftmaschine möglichst schnell zu erreichen und eine ausreichende Wärmemenge für die Enteisung der Fahrzeugscheiben und zum Aufheizen des Fahrgastraums zu verwenden. Aus der Dissertation von E.D. Pott "Verbrauchs-, Emissions- und Heizkomfortoptimierung bei Dieselfahrzeugen durch Energieflussmanagement" geht hervor, dass die nutzbare Wärme des Abgases bereits bei einer kleineren PKW-Dieselbrennkraftmaschine in einem Fahrzyklus im Mittel ca. 1,4 KW beträgt. Bei einem PKW mit einer Brennkraftmaschine, die nach dem Ottoprinzip arbeitet, ist die nutzbare Wärme infolge höherer Abgastemperaturen noch deutlich größer.

Hat die Brennkraftmaschine ihre optimale Betriebstemperatur erreicht, schließt eine Absperrvorrichtung den Kühlmittelzulauf und unterbricht damit den Kühlmitteldurchfluss durch den Wärmetauscher, sodass der Hauptkühler der Brennkraftmaschine und das ihm zugeordnete Gebläse nicht größer dimensioniert zu werden brauchen.

Damit sich das verbleibende Kühlmittel bei abgesperrtem Kühlmittelzulauf im Wärmetauscher nicht überhitzt und dabei zersetzt sowie Ablagerungen in den Kühlmittelkanälen des Wärmetauschers verursacht, wird das Kühlmittel durch eine Fördereinrichtung mittels Gas aus den Kühlmittelkanälen verdrängt, sobald die Absperrvorrichtung im Kühlmittelzulauf geschlossen ist. Das Kühlmittel wird in die Kühlmittelkanäle zurückgefördert kurz, bevor die Absperrvorrichtung wieder geöffnet wird. Hierzu ist an einer hochgelegenen Stelle der Kühlmittelkanäle ein Gasspeicher angeschlossen, aus dem Gas, in der Regel Luft, in die Kühlmittelkanäle gefördert wird und später wieder entnommen wird.

In einfacher Weise ist der Gasspeicher als Faltenbalg ausgebildet, an dessen einer Stirnseite eine Verbindungsleitung zu den Kühlmittelkanälen führt und auf dessen gegenüberliegende Seite ein Aktuator wirkt. Dieser verkürzt den Faltenbalg und presst dadurch ein entsprechendes Gasvolumen durch die Verbindungsleitung in die Kühlmittelkanäle. Der Aktuator kann elektrisch, hydraulisch und/oder pneumatisch betrieben werden. Wird der Aktuator zurückgestellt, dehnt sich der Faltenbalg wieder aus und saugt die Luft aus den Kühlmittelkanälen.

Eine Alternative dazu besteht darin, dass zwischen dem Abgaseintritt und dem Abgasaustritt eine Bypassleitung vorgesehen ist, an deren Abzweigung eine Absperrvorrichtung angeordnet ist, um den Abgaseintritt und die Abgasleitung komplementär zu steuern. Schließt die Absperrvorrichtung den Kühlmittelzulauf, sperrt gleichzeitig die Absperrvorrichtung an der Abzweigung der Bypassleitung den Abgaseintritt und öffnet die Bypassleitung. Da nun der Wärmetauscher nicht mehr vom Abgas durchströmt wird, ist eine Überhitzung des Kühlmittels sicher vermieden.

Grundsätzlich kann der Wärmetauscher an einer beliebigen, geeigneten Stelle in dem Hauptabgasstrom eines Fahrzeugs angeordnet werden. Zweckmäßigerweise ist er jedoch hinter einem Abgaskatalysator angeordnet, um zu vermeiden, daß der Abgaskatalysator verzögert seine Betriebstemperatur erreicht.

### Zeichnung

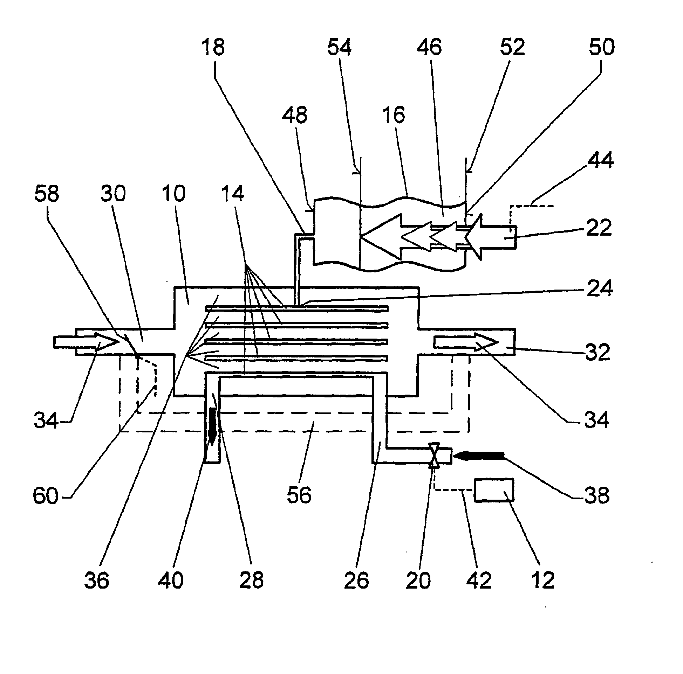

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Die einzige Figur zeigt eine schematische Darstellung eines abschaltbaren Wärmetauschers.

### Beschreibung der Ausführungsbeispiele

Der dargestellte Wärmetauscher 10 arbeitet nach dem Gegenstromprinzip und ist in einem Hauptabgasstrom 34 angeordnet. Er besitzt einen Abgaseintritt 30 und einen Abgasaustritt 32, die durch Abgaskanäle 36 miteinander verbunden sind. An die Abgaskanäle 36 grenzen Kühlmittelkanäle 14, die mit einem Kühlmittelzulauf 26 und einem Kühlmittelrücklauf 28 verbunden sind. Der Kühlmittelfluß ist durch Pfeile 38 und 40 gekennzeichnet.

Im Kühlmittelzulauf 26 ist eine Absperrvorrichtung 20 vorgesehen, die den Kühlmittelzulauf 26 in Abhängigkeit von Betriebs- und Umgebungsparametern mehr oder weniger drosselt bzw. schließt. Die Absperrvorrichtung 20 wird über eine Signalleitung 42 von einer elektronischen Steuereinrichtung 12 angesteuert. Diese kann integrierter Bestandteil einer Motorelektronik sein.

An einer hochgelegenen Stelle 24 sind die Kühlmittelkanäle 14 über eine Verbindungsleitung 18 mit einem Gasspeicher 16 verbunden, der als Faltenbalg ausgebildet ist und durch einen Aktuator in seiner Länge zwischen den Linien 52 und 54 verändert werden kann. Während die Verbindungsleitung 18 an der einen Stirnseite 48 des Gasspeichers 16 vorgesehen ist, wirkt der Aktuator 22 auf die gegenüberliegende Stirnseite 50. Der Aktuator 22 wird über eine Signalleitung 44 ebenfalls von der elektronischen Steuereinheit 12 angesteuert.

Wird die Absperrvorrichtung 20 geschlossen, tritt der Aktuator 22 in Funktion und verkürzt den Faltenbalg 16. Dabei verkleinert sich der Innenraum 46 des Faltenbalgs 16, so daß das Gas, in der Regel Luft, über die Verbindungsleitung 18 in die Kühlkanäle 14 gefördert wird und dort das Kühlmittel verdrängt. Somit kann das Kühlmittel nicht mehr durch die Abgase weiter aufgeheizt werden.

Kurz bevor die Absperrvorrichtung 20 wieder öffnet, fährt der Aktuator 22 wieder in seine Ausgangsstellung zurück, wobei er das Gas aus den Kühlkanälen 14 wieder in den expandierenden Innenraum 46 des Faltenbalgs 16 zurücksaugt. Somit kann das Kühlmittel bei dem wiederhergestellten Durchfluß durch den Wärmetauscher 10 Wärme aus dem Abgas aufnehmen.

Eine Alternative hierzu ist in gestrichelten Linien dargestellt. Dabei ist der Abgaseintritt 30 über eine Bypassleitung 56 mit dem Abgasaustritt 32 verbunden. Im Bereich der Abzweigung der Bypassleitung 56 ist eine weitere Absperrvorrichtung 58 vorgesehen, die über eine Signalleitung 60 mit der Steuereinheit 12 verbunden ist und den Abgaseintritt 30 und die Bypassleitung 56 komplementär steuert, d.h. der Abgaseintritt 30 wird um so mehr gedrosselt bzw. geschlossen, je mehr die Bypassleitung 56 geöffnet wird.

Wird nun die Absperrvorrichtung 20 am Kühlmittelzulauf 26 geschlossen, schließt etwa gleichzeitig die Absperrvorrichtung 58 den Abgaseintritt 30 und öffnet die Bypassleitung 56. Somit wird das Abgas am Wärmetauscher 10 vorbeigeführt, so daß das Kühlmittel in den Kühlmittelkanälen 14 nicht überhitzt werden kann. Öffnet die Absperrvorrichtung 20, öffnet ebenfalls die Absperrvorrichtung 58 den Abgaseintritt 30 und schließt die Bypassleitung 56.

Um das Betriebsverhalten eines nicht näher dargestellten Abgaskatalysators nicht zu stören, ist es zweckmäßig, den Wärmetauscher 10 stromabwärts des Abgaskatalysators anzuordnen.

### Bezugszeichen

- 10: Wärmetauscher
- 12: Steuereinheit
- 14: Kühlmittelkanal
- 16: Gasspeicher
- 18: Verbindungsleitung
- 20: Absperrvorrichtung
- 22: Aktuator
- 24: hochgelegene Stelle
- 26: Kühlmittelzulauf
- 28: Kühlmittelrücklauf
- 30: Abgaseintritt
- 32: Abgasaustritt
- 34: Hauptabgasstrom
- 36: Abgaskanal
- 38: Pfeil
- 40: Pfeil
- 42: Signalleitung
- 44: Signalleitung
- 46: Innenraum
- 48: Stirnseite
- 50: Stirnseite
- 52: Linie
- 54: Linie
- 56: Bypassleitung
- 58: Absperrvorrichtung
- 60: Signalleitung

## Patentansprüche

1. Wärmetauscher (10) zwischen einem Kühlkreislauf und einer Abgasleitung einer Brennkraftmaschine, der einen Kühlmittelzulauf (26) mit einer Absperrvorrichtung (20) und einen Kühlmittelrücklauf (28) für Kühlmittelkanäle (14) sowie einen Abgaseintritt (30) und einen Abgasaustritt (32) für Abgaskanäle (36) aufweist und in einem Hauptabgasstrom (34) angeordnet ist, wobei an einer hochgelegenen Stelle (24) der Kühlmittelkanäle (14) ein Gasspeicher (16) angeschlossen ist, aus dem bei geschlossener Absperrvorrichtung (20) und Überschreiten einer oberen Grenztemperatur des Kühlmittels Gas in die Kühlmittelkanäle (14) gelangt, **dadurch gekennzeichnet, dass** eine Steuereinheit (12) und ein ansteuerbares Aktuator (22) vorgesehen sind, die über eine Signalleitung (44) miteinander verbunden sind, wobei die Steuereinheit (12) über eine weitere Signalleitung mit der Absperrvorrichtung (20) verbunden ist und in Abhängigkeit der Betätigung der Absperrvorrichtung (20) und der Temperatur des Kühlmittels der Aktuator (22) ansteuert, sodass dieser bei geschlossener Absperrvorrichtung (20) und Überschreiten einer oberen Grenztemperatur des Kühlmittels Gas aus dem Gasspeicher (16) in Kühlmittelkanäle (14) fördert und das Kühlmittel aus dem Wärmetauscher (10) verdrängt, während er das Gas in den Gasspeicher (16) zurückfördert, kurz, bevor die Absperrvorrichtung (20) geöffnet wird.

2. Wärmetauscher (10) nach Anspruch 1, **dadurch gekennzeichnet, dass** der Gasspeicher (16) als Faltenbalg ausgebildet ist, an dessen einer Stirnseite (48) eine Verbindungsleitung (18) angeordnet ist und auf dessen gegenüberliegender Stirnseite (50) der Aktuator (22) wirkt.

3. Wärmetauscher (10) nach Anspruch 2, **dadurch gekennzeichnet, dass** der Aktuator (22) elektrisch, hydraulisch und/oder pneumatisch betrieben wird.

4. Wärmetauscher (10) nach dem Oberbegriff von Anspruch 1, **dadurch gekennzeichnet, dass** zwischen dem Abgaseintritt (30) und dem Abgasaustritt (32) eine Bypassleitung (56) vorgesehen ist, an deren Abzweigung eine Absperrvorrichtung (58) angeordnet ist, um den Abgaseintritt (30) und die Bypassleitung (56) komplementär zu steuern.

5. Wärmetauscher (10) nach einem der vorhergehenden Ansprüche, **dadurch gekennzeichnet, dass** er in einem Hauptabgasstrom (34) in Strömungsrichtung hinter einem Abgaskatalysator angeordnet ist.

## Claims

1. Heat exchanger (10) between a cooling circuit and an exhaust pipe of an internal combustion engine, which has a coolant feed (26) with a shut-off device (20) and a coolant return (28) for coolant passages (14), as well as an exhaust-gas inlet (30) and an exhaust-gas outlet (32) for exhaust-gas passages (36) and which is arranged in a main exhaust gas stream (34), a gas reservoir (16), from which gas passes into the coolant passages (14) when the shut-off device (20) is closed and an upper limit temperature of the coolant is exceeded, is connected to a high point (24) of the coolant passages (14), **characterized in that** a control unit (12) and a controllable actuator (22) are provided, connected to one another via a signal line (44), the control unit (12) being connected to the shut-off device (20) via a further signal line and controlling the actuator (22) as a function of the actuation of the shut-off device (20) and the temperature of the coolant, so that the actuator (22), when the shut-off device (20) is closed and an upper limit temperature of the coolant is exceeded, delivers gas from the gas reservoir (16) into coolant passages (14) and displaces the coolant out of the heat exchanger (10), whereas it returns the gas into the gas reservoir (16) just before the shut-off device (20) is opened.

2. Heat exchanger (10) according to Claim 1, **characterized in that** the gas reservoir (16) is designed as a bellows, at one end side (48) of which a connecting line (18) is arranged and the opposite end side (50) of which is acted on by the actuator (22).

3. Heat exchanger (10) according to Claim 2, **characterized in that** the actuator (22) is electrically, hydraulically and/or pneumatically operated.

4. Heat exchanger (10) according to the preamble of Claim 1, **characterized in that** between the exhaust-gas inlet (30) and the exhaust-gas outlet (32) there is a bypass line (56), with a shut-off device (58) arranged at the point where it branches off, in order to control the exhaust-gas inlet (30) and the bypass line (56) in a complementary way.

5. Heat exchanger (10) according to one of the preceding claims, **characterized in that** it is arranged in a main exhaust-gas stream (34), downstream of an exhaust-gas catalytic converter, as seen in the direction of flow.

## Revendications

1. Échangeur de chaleur (10) entre un circuit de refroidissement et une conduite de gaz d'échappement d'un moteur à combustion interne, qui présente une alimentation en liquide de refroidissement (26) avec un dispositif de blocage (20) et un retour du liquide de refroidissement (28) des canaux de liquide de refroidissement (14) ainsi qu'une entrée des gaz d'échappement (30) et une sortie des gaz d'échappement (32) des canaux de gaz d'échappement (36), et qui est disposé dans un flux principal de gaz d'échappement (34), un réservoir de gaz (16) étant raccordé en un point haut (24) des canaux de liquide de refroidissement (14) et, à partir de ce réservoir, le gaz parvient dans les canaux de liquide de refroidissement (14) lorsque le dispositif de blocage (20) est fermé et qu'une température limite supérieure du liquide de refroidissement a été dépassée,
**caractérisé en ce qu'**
une unité de commande (12) et un actionneur (22) pouvant être commandé sont reliés entre eux par une ligne de signaux (44), et l'unité de commande (12) reliée au dispositif de blocage (20) par une autre ligne de signaux et commande l'actionneur (22) en fonction de l'activation du dispositif de blocage (20) et de la température du liquide de refroidissement de telle sorte que, lorsque le dispositif de blocage (20) est fermé et qu'une température limite supérieure du liquide de refroidissement a été dépassée, cet actionneur transporte le gaz provenant du réservoir de gaz (16) dans des canaux de liquide de refroidissement (14) et refoule le liquide de refroidissement de l'échangeur de chaleur (10) tandis qu'il repousse le gaz dans le réservoir de gaz (16) juste avant l'ouverture du dispositif de blocage (20).

2. Échangeur de chaleur (10) selon la revendication 1,
**caractérisé en ce que**
le réservoir de gaz (16) a la forme d'un soufflet, contre une face frontale (48) duquel est disposée une conduite de liaison (18) et l'actionneur (22) agit sur la face frontale (50) opposée.

3. Échangeur de chaleur (10) selon la revendication 2,
**caractérisé en ce que**
l'actionneur (22) est entraîné électriquement, hydrauliquement et/ou pneumatiquement.

4. Échangeur de chaleur (10) selon le préambule de la revendication 1,
**caractérisé en ce que**
entre l'entrée des gaz d'échappement (30) et la sortie des gaz d'échappement (32), une conduite de dérivation (56) présente, un dispositif de blocage (58) pour commander de manière complémentaire l'entrée des gaz d'échappement (30) et la conduite de dérivation (56).

5. Échangeur de chaleur (10) selon l'une quelconque des revendications précédentes,
**caractérisé en ce qu'**
un catalyseur de gaz d'échappement est disposé dans la direction d'écoulement en arrière d'un flux principal de gaz d'échappement (34).
